# FASCICULE DE BREVET EUROPEEN

(11) **EP 0 534 852 B1**
(45) Date de publication et mention de la délivrance du brevet: **13.11.1996**
(21) Numéro de dépôt: 92402619.8
(22) Date de dépôt: 24.09.1992
(51) Int. Cl.: H04Q 1/453, H04Q 1/457

(54) **Procédé et dispositif de transmission multiplexée de signaux DTMF**
Verfahren und Anordnung für Multiplexübertragung von DTMF-Signalen
Method and apparatus for multiplexed transmission of DTMF signals

(30) Priorité: 27.09.1991 FR 9111924
(43) Date de publication de la demande: 31.03.1993
(73) Titulaire: MATRA COMMUNICATION, F-29562 Quimper Cédex 9 (FR)
(72) Inventeur: Mouly, Michel, F-91120 Palaiseau (FR)
(74) Mandataire: Fort, Jacques

(56) Documents cités:
- US-A- 4 837 800
- MITEL APPLICATION NOTE MSAN-108 Juin 1983, 'Applications of the MT8870 Integrated DTMF Receiver'
- ELECTRONIC ENGINEERING vol. 62, no. 762, Juin 1990, WOOLWICH, LONDON GB pages 79 - 85 BALSTON ET AL. 'Data service handling in the GSM cellular radio system'
- IEEE GLOBAL TELECOMMUNICATIONS CONFERENCE & EXIBITION, vol. 1/3, 2 Déc. 1990, San Diego, CA, USA; pages 485-489, Shinagava et al.: "Digital Mobile Radio Switching System"

## Description

L'invention concerne la transmission de signaux, dits "à fréquences vocales" constitués par des couples de tonalités choisies parmi N fréquences prédéterminées, dans un réseau téléphonique à transmission de la parole sous forme numérique.

L'invention trouve une application particulièrement importante dans les réseaux de transmission de la parole vers les mobiles et à partir de mobiles, sous forme d'un multiplex de trames de parole ayant un format déterminé.

A titre d'exemple particulièrement important de réseaux de ce type, on peut citer ceux qui mettent en oeuvre le système GSM (voir p. ex. ELECTRONIC ENGINEERING vol. 62, no.762, Juin 1990, WOOLWICH, LONDON GB pages 79 - 85 BALSTON ET AL. 'Data service handling in the GSM cellular radio system'), dans lequel la parole est transmise par radio sous forme numérique, par trames de 260 éléments binaires (ou bits) envoyés à la cadence d'une toutes les 20 ms. Le système GSM n'utilise pas les signaux à fréquences vocales définis ci-dessus (dits signaux DTMF expliqué p. ex. dans MITEL APPLICATION NOTE MSAN-108 Juin 1983, 'Applications of the MT8870 Integrated DTMF Receiver'), constitués chacun par l'émission simultanée de deux fréquences choisies parmi 16 combinaisons pendant quelques centaines de millisecondes) pour la numérotation initiale des appels. Mais il est souhaitable que le réseau puisse transmettre de tels signaux au cours d'une conversation téléphonique, afin de répondre à certains besoins. On peut notamment citer, dans le cas d'une transmission depuis une station mobile vers une station de base fixe appartenant à l'infrastructure du système, l'interrogation à distance de répondeurs téléphoniques, la commande de fonctions domestiques, etc...

La transmission de signaux DTMF sur un réseau téléphonique du genre défini plus haut pose des problèmes. En effet, le mode de codage numérique choisi est optimisé pour la transmission de la voix. Ses performances sont mauvaises pour la transmission de signaux DTMF, à un point tel qu'un détecteur de qualité commerciale normale ne peut identifier le signal DTMF dans la plupart des cas, par suite des distorsions introduites par le codage et le décodage.

Pour les réseaux utilisant le système GSM, on a proposé un procédé permettant d'écarter cette difficulté dans le cas de la transmission d'une station mobile vers une station de base. Pour cela on utilise, pour transmettre les signaux DTMF, des messages de signalisation déjà prévus par le standard pour véhiculer des informations de service. Le générateur de messages de service est adapté pour fournir un message particulier pour chaque appui de l'utilisateur sur une touche particulière. Le signal à fréquences vocales est alors généré dans la station de base. On évite ainsi toute distorsion due au codage et au décodage.

Cette solution a malheureusement de nombreux inconvénients.

Etant donné que la transmission des messages de signalisation se fait à la place de trames de parole, elle interrompt la parole. Les messages de signalisation sont transmis de façon asynchrone et le non-synchronisme de la transmission des messages de signalisation réduit la précision des instants de début et de fin du signal à fréquences vocales, ce qui est gênant pour certaines applications. Le protocole de transmission de messages de signalisation implique des messages d'acquittement de la station de base vers la station mobile, d'où des interruptions supplémentaires qui ne correspondent à aucun signal utile. Dans la station de base, le générateur de signaux DTMF doit être commandé par la logique de contrôle qui analyse les messages de signalisation. Or cette logique de contrôle est éloignée du dispositif de codage et décodage de la parole où vocodeur. Aucun lien permettant une commande n'est prévu entre la logique et le vocodeur. La mise en oeuvre du procédé proposé à ce jour accroît donc la complexité.

L'accroissement de complexité est encore plus notable si l'on tente de transmettre des signaux à des fréquences vocales de la station de base vers les stations mobiles en utilisant des messages de signalisation. Il n'est en effet pas acceptable, du point de vue du coût, de placer un dispositif de détection des signaux DTMF au cours de la communication en cours dans l'organe de contrôle qui gère la signalisation. La seule solution économiquement acceptable implique une contrainte : l'utilisateur de la station mobile doit indiquer qu'il va recevoir des signaux DTMF. Ce n'est qu'à la réception de cette indication qu'un dispositif de détection de signaux DTMF est réservé à la communication. La mise en oeuvre par l'usager de la station mobile est compliquée et l'interruption de la conversa!ion est allongée.

La présente invention vise à fournir un procédé et un dispositif de transmission de signaux à fréquences vocales destinés à un réseau téléphonique du type ci-dessus défini, répondant mieux que ceux antérieurement connus aux exigences de la pratique. Elle vise notamment à éviter les distorsions de tels signaux tout en ne mettant en oeuvre que des moyens simples. Elle vise également à assurer la synchronisation entre signaux à fréquences vocales et messages de parole.

Dans ce but l'invention propose notamment un procédé de transmission par des couples de fréquences vocales parmi N fréquences prédéterminées sur un réseau téléphonique à transmission de parole sous forme d'un multiplex de trames de parole ayant un format déterminé et contenant chacune un nombre déterminé d'échantillons de parole numérisés, caractérisé en ce que : on affecte à chaque fréquence vocale ou à chaque couple de fréquences un code numérique ; on génère les codes numériques respectifs en réponse à une commande d'émission d'un couple de fréquences ; on insère chaque code numérique dans une trame numérique audit format comportant un mot d'identification constituant un groupement exclu pour les trames de parole ; et, à la réception, on génère les couples de fréquences vocales respectifs à l'aide du décodeur de parole, en réponse à la reconnaissance desdits codes numériques, en synchronisme avec les trames comportant l'un desdits mots d'identification.

L'invention propose également un système de communication numérique permettant de mettre en oeuvre le procédé ci-dessus défini, comprenant au moins une station de base et des stations mobiles ayant chacune un vocodeur de codage de la parole en trames numériques de format déterminé et de décodage desdites trames et ayant une logique de contrôle permettant d'analyser des messages de signalisation transmis en substitution des trames, caractérisé en ce que le vocodeur d'une au moins des stations est prévu pour générer, en réponse à un signal de demande d'émission d'un couple de fréquences vocales, une trame audit format déterminé comportant un code numérique d'identification du couple de fréquences (tonalités à transmettre) et un mot d'identification ou marqueur. Le vocodeur de l'autre station comporte alors des moyens pour générer le couple de fréquences respectif en réponse à la réception d'une telle trame.

Le vocodeur des deux stations doit comporter les deux types de moyens pour permettre une transmission bidirectionnelle.

L'invention est particulièrement simple à mettre en oeuvre dans le cas d'un réseau au standard GSM, car ce standard prévoit la possibilité de transmettre des trames au format des trames de parole, mais transportant une indication de bruit de confort. Il est alors possible d'utiliser les mêmes moyens pour émettre et identifier les trames transportant une indication de bruit de confort et pour émettre et identifier les trames comportant l'indication d'un couple de fréquences vocales.

L'invention sera mieux comprise à la lecture de la description qui suit d'un mode particulier de réalisation de l'invention, donné à titre d'exemple, et de la comparaison qui en est faite avec des dispositifs antérieurs. La description se réfère aux dessins qui l'accompagnent, dans lesquels :
- la figure 1 est un schéma de principe montrant un mode de transmission de signaux DTMF d'une station mobile vers une station de base, déjà proposé ;
- la figure 2 est un schéma montrant comment peut s'effectuer la transmission de signaux DTMF de la station de base vers une station mobile, en mettant en oeuvre la même approche que dans le cas de la figure 1 ;
- la figure 3 est un schéma de principe montrant un mode particulier de mise en oeuvre de l'invention ;
- la figure 4 montre une structure possible de trames de transmission de signaux DTMF, dans le cas particulier de l'application de l'invention à des trames suivant le système GSM.

Etant donné que la constitution de base des systèmes GSM a déjà été décrite dans de nombreux documents, seules seront données ici les indications nécessaires pour la compréhension de l'invention.

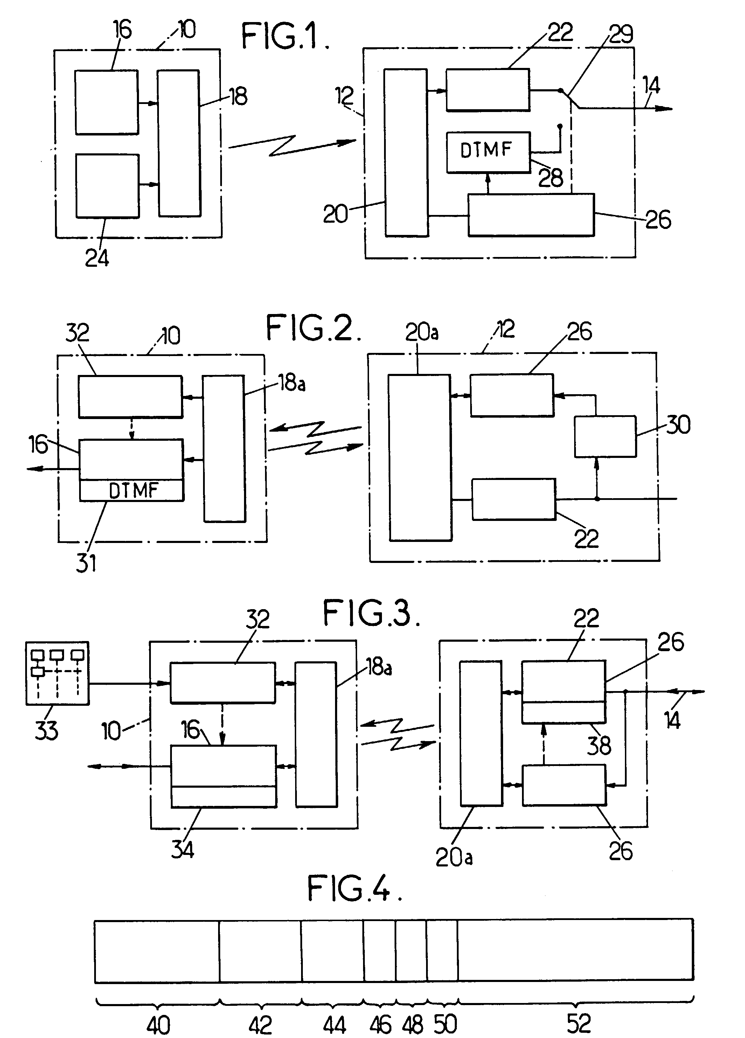

La figure 1 montre schématiquement la façon dont peuvent être organisées une station mobile 10 et une station de base 12 d'un réseau au standard GSM pour permettre l'envoi de signaux DTMF vers des circuits d'utilisation (qui peuvent être constitués par le réseau téléphonique commuté) par l'intermédiaire de la sortie 14 de la station de base. La station mobile 10 comporte un vocodeur 16 permettant de coder le signal de parole en trames numériques et de les adresser à des circuits d'émission 18. La station de base comporte un récepteur 20 relié à un vocodeur 22 permettant de reconstituer le signal de parole.

La station de base 10 comporte également un générateur 24 de messages de signalisation relié à l'émetteur 18.

De son côté, la station de base 12 comporte un circuit de contrôle 26 vers lequel sont orientés les messages de signalisation. Pour permettre la restitution des signaux DTMF identifiés par les messages de signalisation, la station de base comporte un générateur DTMF 28 commandé par le contrôleur 26. Le contrôleur commande également un commutateur 29 permettant d'aiguiller, vers la sortie 14, le signal analogique de parole, reconstitué par le vocodeur 22, ou le signal DTMF.

La figure 2, similaire à la figure 1, montre la complexité de la transmission des signaux DTMF vers la station mobile. Le signal DTMF entrant est identifié par un détecteur 30 qui commande le circuit de contrôle 26. Celui-ci échange alors, par l'intermédiaire des circuits émetteur-récepteur 20a, les messages de signalisation annonçant la transmission d'un signal DTMF. Le contrôleur 32 de la station mobile 10 conditionne à cet effet l'ensemble vocodeur 16-générateur de signaux analogiques DTMF 31 de la station mobile. Pendant la transmission du signal DTMF, le vocodeur 22 est inhibé.

La mise en oeuvre de l'invention peut être effectuée de façon simple à l'aide d'un dispositif qui n'implique que très peu de modifications d'une station mobile actuelle (voir fig.3). Pour la transmission de la station mobile 10 vers la station de base 12, il suffit de compléter le contrôleur 32 de la station 10 d'une entrée de commande par un clavier 33 et de constituer le contrôleur 32 de façon qu'il puisse actionner un codeur-décodeur 34 de constitution de trames au format des trames de parole, mais représentant un couple de fréquences. Ce codeur-décodeur peut être intégré au vocodeur 16. La station de base comporte simplement un générateur 21 DTMF 38 qui peut lui aussi être intégré au vocodeur 22 et qui restitue, sur la sortie 14, les fréquences vocales représentées par les trames décelées par le contrôleur 26.

Dans le sens inverse, les signaux DTMF entrants sur l'entrée-sortie de parole analogique 14 sont détectés par le contrôleur 26 comportant un détecteur de fréquences vocales entrantes. Le détecteur commande le générateur DTMF 38 qui fournit les trames appropriées au format des trames de parole. L'identification des ces trames particulières et la restitution s'effectuent de façon symétrique de celle qui a été décrite plus haut.

Comme il a déjà été indiqué plus haut, il est avantageux, dans le cas d'un système GSM, d'identifier les trames binaires de transmission de signaux à fréquences vocales par adoption d'une constitution de trames pratiquement exclue pour les trames représentant la parole. En particulier, il existe un certain nombre de combinaisons de bits tous mis à zéro qui n'apparaît pratiquement jamais jour représenter la parole.

On a déjà proposé d'utiliser de telles trames pour donner une indication du bruit de confort à générer.

Dans le cas particulier illustré en figure 4, les trames destinées à représenter des signaux DTMF sont des trames de 260 bits, comme les trames de parole, mais elle comprennent un groupe de 40 bits tous à zéro dans une disposition particulière, constituant un marqueur permettant de les différencier des trames représentant la parole. On peut notamment utiliser un groupe 40 constitué par 95 bits à zéro, de la même façon que pour des trames représentant un bruit de confort.

Comme dans le cas des trames représentant un bruit de confort, deux groupes codés 42 et 44, par exemple respectivement de 36 bits et de 24 bits peuvent être prévus. Le premier groupe code les caractéristiques spectrales du bruit et le second code le niveau du bruit, éventuellement en quatre valeurs chaque fois sur 6 bits. Chaque valeur correspond à une tranche de 5 ms de l'intervalle de 20 ms entre trames.

Enfin, on utilise certains parmi les 105 bits suivants (inutilisés et mis à zéro dans le cas d'une trame représentant le bruit de confort) pour compléter le marqueur permettant de distinguer une trame DTMF à la fois d'une trame de parole et d'une trame de bruit. Une solution commode consiste à utiliser :
- 1 à 8 bits mis au niveau 1 (groupe 46), pour identifier une trame DTMF et constituer le marqueur avec le groupe 40 ;
- 4 bits (groupe 48) indiquant la nature du signal DTMF (couple de fréquences) à transmettre parmis les 16 signaux disponibles constituant donc le code numérique
- 4 bits (groupe 50) indiquant quelles tranches de 5 ms doivent contenir du bruit et quelles tranches doivent contenir le signal DTMF.

La station qui reçoit une trame émet le signal DTMF dans une ou plusieures tranches de 5 ms, suivant les indications données, et un bruit ayant les caractéristiques indiquées dans les autres tranches.

Les trois groupes de bits 46, 48 et 50 sont avantageusement choisis parmi les vingt quatre bits qui sont le plus protégés par les codes de correction d'erreur utilisés.

Enfin, les bits restants (groupe 52) sont mis à zéro.

Il faut bien noter que la représentation donnée en figure 4 vise simplement à faire apparaître l'existence de différents groupes de bits. Mais le mode de constitution des trames GSM fait que les bits d'un même groupe ne se succèdent pas.

Grâce à cette disposition, les modifications apportées aux vocodeurs existants pour permettre la transmission DTMF sont extrêmement simples. On voit aussi que le début et la fin de chaque signal DTMF peuvent être définis à 5 ms prés, en synchronisme complet avec le signal de parole.

## Revendications

1. Procédé de transmission de couples de fréquences vocales parmi N fréquences prédéterminées sur un réseau téléphonique à transmission de parole sous forme d'un multiplex de trames binaires de parole ayant un format déterminé,
caractérisé en ce que : on affecte à chaque fréquence vocale ou à chaque couple de fréquences un code numérique ; on génère les codes numériques respectifs en réponse à une commande d'émission d'un couple de fréquences ; on insère chaque code numérique dans une trame numérique audit format comportant un mot d'identification constituant un groupement exclu pour les trames de parole ; et, à la réception, on génère les couples de fréquences vocales respectifs à l'aide du décodeur de parole, en réponse à la reconnaissance desdits codes numériques, en synchronisme avec les trames comportant l'un desdits mots d'identification.

2. Procédé selon la revendication 1, caractérisé en ce que le mot d'identification contient un marqueur qui est commun aux trames de parole et aux trames éventuelles représentant un bruit de confort et un marqueur complémentaire.

3. Procédé selon la revendication 1 ou 2, caractérisé en ce que le code numérique comporte des bits d'indication de la durée d'émission du signal à fréquences vocales.

4. Système de transmission de signaux à fréquences vocales sur un réseau téléphonique à transmission de parole sous forme d'un multiplex de trames de paro-le ayant un format déterminé, ledit système comprenant au moins une station de base (12) et des stations mobiles (10) ayant chacune un vocodeur (16, 22) de codage de la parole en trames numériques de format déterminé et de décodage desdites trames et ayant des moyens de contrôle permettant d'analyser des messages de signalisation transmis en substitution des trames, le système étant caractérisé en ce que le vocodeur (16, 22) d'une au moins des stations est prévu pour générer, en réponse à un signal de demande d'émission d'un couple de fréquences vocales, une trame audit format déterminé comportant un code numérique d'identification du couple de fréquences et un mot d'identification.

5. Système selon la revendication 4, caractérisé en ce que chaque station comporte également des moyens pour générer le couple de fréquences respectif en réponse à la réception d'une telle trame.

6. Système suivant la revendication 4 ou 5, caractérisé en ce que la station mobile comprend un dispositif de contrôle commandant l'émission d'une trame ayant un mot d'identification en réponse à l'actionnement d'une touche correspondant à un signal particulier à fréquences vocales.

7. Station de base (12) ou mobile (10) pour système de transmission de signaux à fréquences vocales sur un réseau téléphonique à transmission de parole sous forme d'un multiplex de trames de parole ayant un format déterminé, la dite station ayant un vocodeur (16,22) de codage de la parole en trames numériques de format déterminé et de décodage desdites trames et ayant des moyens de contrôle permettant d'analyser des messages de signalisation transmis en substitution des trames, la dite station étant caractérisée en ce que le vocodeur (16,22) prévu pour générer, en réponse à un signal de demande d'émission d'un couple de fréquences vocales, une trame audit format déterminé comportant un code numérique d'identification du couple de fréquences et un mot d'identification.

## Patentansprüche

1. Verfahren zur Übertragung von Sprechfrequenzenpaaren unter N vorbestimmten Frequenzen in einem Telefonnetz zur Sprachübertragung in Form eines Multiplexes von binären Sprachsignalen, die ein bestimmtes Format aufweisen,
dadurch gekennzeichnet, daß:
man jede Sprechfrequenz oder jedes Frequenzenpaar mit einem numerischen Code versieht;
man die jeweiligen numerischen Codes als Antwort auf einen Sendebefehl von einem Frequenzenpaar erzeugt;
man jeden numerischen Code in ein numerisches Signal besagten Formats einfügt, das ein Identifikationswort enthält, das eine exklusive Gruppe für die Sprachsignale bildet;
und daß man beim Empfang mit Hilfe eines Sprachdecoders als Antwort auf das Wiedererkennen der besagten numerischen Codes gleichzeitig mit den Signalen, die eines der besagten Identifika-tionsworte enthalten, die jeweiligen Sprechfre-quenzenpaare erzeugt.

2. Verfahren nach Anspruch 1, dadurch gekennzeichnet, daß das Identifikationswort einen für das Sprach-signal und eventuelle Signale, die ein Annehmlichkeitsgeräusch repräsentieren, gemeinsamen Markierer und einen komplementären Markierer enthält.

3. Verfahren nach einem der Ansprüche 1 oder 2, dadurch gekennzeichnet, daß der numerische Code Identifikationsbits von der Sendedauer des Signals der Sprechfrequenzen trägt.

4. System zur Übertragung von Sprechfrequenzsignalen in einem Telefonnetz zur Sprachübertragung in Form eines Multiplexes von Sprachsignalen in einem bestimmten Format, enthaltend wenigstens eine Basisstation (12) und mobile Stationen (10) mit jeweils einem Vocoder (16, 22) zur Verschlüsselung der Sprache in numerische Signale eines bestimmten Formats und zur Entschlüsselung dieser Signale und mit Steuermitteln zur Analyse von Signalisierungsnachrichten, die als Ersatz der Signale übertragen werden, dadurch gekennzeichnet, daß der Vocoder (16, 22) wenigstens einer der Stationen als Antwort auf ein Sendebefehlssignal eines Sprechfrequenzenpaares zur Erzeugung eines Signals im besagten bestimmten Format vorgesehen ist, das einen numerischen Identifikationscode aus Frequenzenpaaren und ein Identifikationswort enthält.

5. System nach Anspruch 4, dadurch gekennzeichnet, daß jede Station gleichfalls Mittel zur Erzeugung der jeweiligen Frequenzenpaare als Antwort auf den Empfang eines solchen Signals enthält.

6. System nach einem der Ansprüche 4 oder 5, dadurch gekennzeichnet, daß die mobile Station eine Steuervorrichtung enthält zur Steuerung des Sendens eines Signals mit einem Identifikationswort als Antwort auf die Betätigung einer Taste, die einem bestimmten Signal von Sprechfrequenzen entspricht.

7. Basisstation (12) oder mobile Station (10) für ein System zur Übertragung von Sprechfrequenzsignalen in einem Telefonnetz zur Sprachübertragung in Form eines Multiplexes von Sprachsignalen in einem bestimmten Format, enthaltend einen Vocoder (16, 22) zur Verschlüsselung der Sprache in numerische Signale eines bestimmten Formats und zur Entschlüsselung dieser Signale und Steuermittel zur Analyse von Signalisierungsnachrichten, die als Ersatz der Signale übertragen werden, dadurch gekennzeichnet, daß der Vocoder als Antwort auf ein Sendebefehlssignal eines Sprechfrequenzpaares zur Erzeugung eines Signals im besagten bestimmten Format vorgesehen ist, das einen numerischen Identifikationscode aus Frequenzpaaren und ein Identifikationswort enthält.

## Claims

1. Process for transmitting pairs of voice frequencies from N predetermined frequencies on a telephone speech transmission network in the form of a binary speech frame multiplex having a specific format,
**characterised in that** a digital code is assigned to each voice frequency or to each pair of frequencies; the respective digital codes are generated in response to a frequency pair transmission command; each digital code is inserted in a digital frame of said format containing an identification word composed of a group which is excluded from the speech frames; and on reception, the respective pairs of voice frequencies are generated with the aid of the speech decoder on recognition of said digital codes in synchronism with the frames containing one of the said identification words.

2. Process according to Claim 1, **characterised in that** the identification word contains a marker that is common to the speech frames and any frames representing comfort noise, and an additional marker.

3. Process according to Claim 1 or 2, **characterised in that** the digital code contains bits indicating the duration of the voice frequency signal transmission.

4. System for transmitting voice frequency signals on a telephone speech transmission network in the form of a speech frame multiplex having a specific format, said system comprising at least one base station (12) and mobile stations (10), each having a vocoder (16, 22) for coding speech in digital frames of specific format and for decoding said frames, and having monitoring means enabling the transmitted signalling messages to be analysed by frame substitution, **characterised in that** in response to a voice frequency pair transmission request signal, the vocoder (16, 22) of at least one of the stations is intended to generate a frame of said specified format containing a digital identification code of the frequency pair, and an identification word.

5. System according to Claim 4, **characterised in that** each station also contains means for generating the respective frequency pair in response to the reception of such a frame.

6. System according to Claim 4 or 5, **characterised in that** the mobile station contains a control device controlling the transmission of a frame having an identification word in response to the actuation of a key corresponding to a particular voice frequency signal.

7. Base station (12) or mobile station (10) for a voice frequency signal transmission system on a telephone speech transmission network in the form of a speech frame multiplex having a specific format, said station having a vocoder (16, 22) for coding the speech in digital frames of specific format, and for decoding said frames, and having monitoring means enabling the transmitted signalling messages to be analysed by frame substitution, said station being **characterised in that** in response to a voice frequency pair transmission request signal, the vocoder (16, 22) intended to generate a frame of said specific format contains a digital identification code of the frequency pair, and an identification word.
